# EUROPEAN PATENT SPECIFICATION

(11) **EP 1 896 897 B1**
(45) Date of publication and mention of the grant of the patent: **04.04.2012**
(21) Application number: 06764518.4
(22) Date of filing: 26.06.2006
(51) Int. Cl.: G03B 17/06, G06K 9/00

(54) **METHOD, DEVICE, AND PROGRAM PRODUCT FOR VISUALLY INDICATING A SELECTED OBJECT, USING A DEVICE EQUIPPED WITH CAMERA**
VERFAHREN, EINRICHTUNG UND PROGRAMMPRODUKT ZUM VISUELLEN ANZEIGEN EINES GEWÄHLTEN OBJEKTS UNTER VERWENDUNG EINER MIT KAMERA AUSGESTATTETEN EINRICHTUNG
PROCEDE, DISPOSITIF ET PRODUIT-PROGRAMME POUR INDIQUER VISUELLEMENT UN OBJET SELECTIONNE, A L'AIDE D'UN DISPOSITIF EQUIPE D'UNE CAMERA

(30) Priority: 29.06.2005 FI 20055365
(43) Date of publication of application: 12.03.2008
(73) Proprietor: Nokia Corporation, 02150 Espoo (FI)
(72) Inventor: PAALASMAA, Joonas, FI-00180 HELSINKI (FI)
(74) Representative: Pursiainen, Timo Pekka
(86) International application number: PCT/FI2006/050279
(87) International publication number: WO 2007/000491

(56) References cited:
- EP-A1- 1 453 297
- WO-A1-2004/023766
- DE-A1- 19 800 447
- DE-A1- 19 912 254
- DE-U1- 20 117 201
- DE-U1- 29 920 452
- US-A1- 2002 028 002
- PATENT ABSTRACTS OF JAPAN vol. 2003, no. 12 05 December 2003 & JP 2004 364067 A (NIPPON TELEGR & TELEPH CORP) 24 December 2004
- PATENT ABSTRACTS OF JAPAN vol. 2003, no. 05 12 May 2003 & JP 2003 005628 A (MITSUBISHI ELECTRIC CORP) 08 January 2003
- PATENT ABSTRACTS OF JAPAN vol. 2003, no. 04 02 April 2003 & JP 2002 369189 A (FFC:KK) 20 December 2002

## Description

The present invention relates to a method, device, and program product for visually indicating a selected object in a desired subject, in which a bit image is taken of the subject, and is analysed in order to find the occurrence of the selected object form the bit image.

It is quite difficult to find a name and its related telephone number from a densely written list. Similarly, it is difficult to search for a specific street on a map. Another difficult situation is when someone has a map in their hand, but does not known where they are on the map.

The present invention is intended to create a new method and device for solving the aforementioned problems. The characteristic features of the method according to the invention are stated in Claim 1 and correspondingly the characteristic features of the device are stated in Claim 6. In addition, the characteristics of the program product designed to implement the method are stated in Claim 11.

The invention combines a camera and projector, in such a way that some indicator, for example, a frame, point, or arrow can be projected in the subject photographed by the camera. The subject can be, for example, a list or map. In the method, the camera is first of all used to take an image, which is analysed and, on the basis of the analysis, accentuation is reflected by a projector onto the imaged subject. In this case, OCR (Optical Character Recognition) technology, which is as such known, can be exploited to detect text from a bit image. In OCR scanning according to the invention, the bit positions corresponding to the detected text are also recorded. Equally, it is possible to use other known pattern recognition, as long as the pattern can be defined and it can appear in the subject.

The procedure can operate as follows. Because the camera and projector are oriented in the same direction, i.e. the viewing images point in the same direction, the projection can be created in the same direction in which the detail is seen in the camera. The projected image does not appear in precisely the same location as the detected detail, because the projector cannot be in precisely the same place in the device as the camera is. It is possible to determine how many degrees the position of the image differs from that of the projection and arrange accordingly the angle of the indicator being projected. The distance of the subject from the device can be defined for this correction. If several distances are defined from different sides of the subject, a virtual three-dimensional model of it can be created.

OCR technology can be used to scan typewritten text in the image area into a character form. At the same time, a sufficient number of the bit positions of the detected text are stored. After this procedure, it is possible to perform text retrieval from the scanned text using selected character strings, for example a name. When a hit is found, the bit position corresponding to it is recorded for later use.

The user can input text, speech, or other input to the search application. The input methods can be augmented by using scanned text data or images (pattern). When a hit is found from the scanned text, a speech recognition element, for example, can be used to limit the number of alternatives in connection with ambiguous situations.

Use of the search application ranges from searching for contact data in a dense list to finding a specific street on a map.

In the following, the invention is examined with reference to the accompanying drawings, which show some embodiments of the invention.
- Figures 1a and 1b: show the use of the device according to the invention in determining a location on a map,
- Figures 2a and 2b: show a way to search for a name from a list,
- Figure 3: shows the device being used in levelling,
- Figure 4: shows the mutual geometry of the camera and the projector, and
- Figure 5: shows a flow chart of a search for a name from a list.

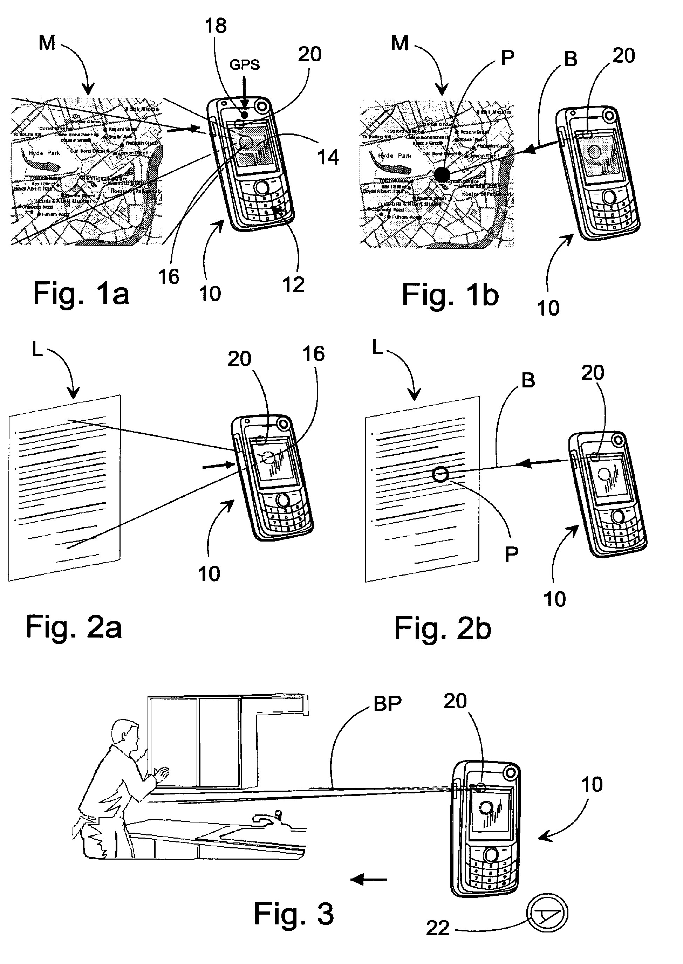

In the figures, the device according to the invention is marked with the reference number 10. It can be a mobile station or a PDA device. In the device 10, there is generally a microprocessor, a program and data memory, a display 14, and a keypad 12 and/or other I/O means. In terms of the present invention, it is essential that there is a camera 16 and a miniature laser projector 20 in the device. In the application of Figures 1a and 1b, there are also GPS positioning means in the device. In the device 10, there is an operating system, in which an application program is installed, which performs imaging and projection, as well as image analysis.

The miniature laser projector shown is made by Symbol Technologies Inc., USA (http://www.symbol.com/products/oem/lpd.html#1).

In the application of Figures 1a and 1b, the user has a map M, the position of the imaging of which is input to the application (not shown). This can take place either by entering mechanically the values of the detectable co-ordinates, or even by reading such information directly from the map, with the aid of OCR recognition. In Figure 1a, once the user has started the application, it takes an image of the map, which it stores as a bit image in the memory. On the other hand, the absolute position of the device 10 can be identified using a GPS-positioning device. The application calculates the position data to the bit image of the image, from which it is possible in turn to calculate the parameters for the optical indicator, in this case for the control of the laser projector. According to Figure 1b, the device shows the position 'You are here' on the map M, with the aid of a laser dot, square, or other similar mark.

The above embodiment can be adapted, for instance in such a way that, instead of the GPS positioning, the local street name is entered and, on the other hand texts, i.e. character strings are detected from the bit image using OCR technology, and are stored with the position data. The input is compared with the OCR-recognized texts, in which case a hit will give the position data of the street in question. With the aid of this, the projection parameters are calculated as above.

In Figures 2a and 2b, a task is resolved, in which a telephone number is sought from a dense list of names L. According to Figure 2a, an image is taken of the list of names and stored as a bit image in the memory. The application can then perform effective OCR recognition and store and the names and telephone numbers as character strings, as well as the position in the bit image of each character string. The selected name is given as input, which the application retrieves from the stored character strings. The character string according to the hit also gives the position data, by means of which the control parameters are defined, for showing the laser image (for example, a rectangle) at the name.

In preferred examples, the precision of the projection can be increased by re-imaging the subject after analysis, which retrieves the change in position of the camera immediately prior to projecting. An approximate and thus rapid image analysis is sufficient for this.

A virtual ruler is shown in Figure 3.

When the shapes of the objects are then detected in the field of vision of the camera, it is possible to calculate how a ruler would be positioned on the planar surfaces of the shapes and a ruler can be projected onto the surface. If information on the orientation of the camera is added to this, the ruler BP can be set on the surface either horizontally or vertically, as required. The orientation information is obtained either from the rest of the structure, or by using an angle sensor 22 contained in the device.

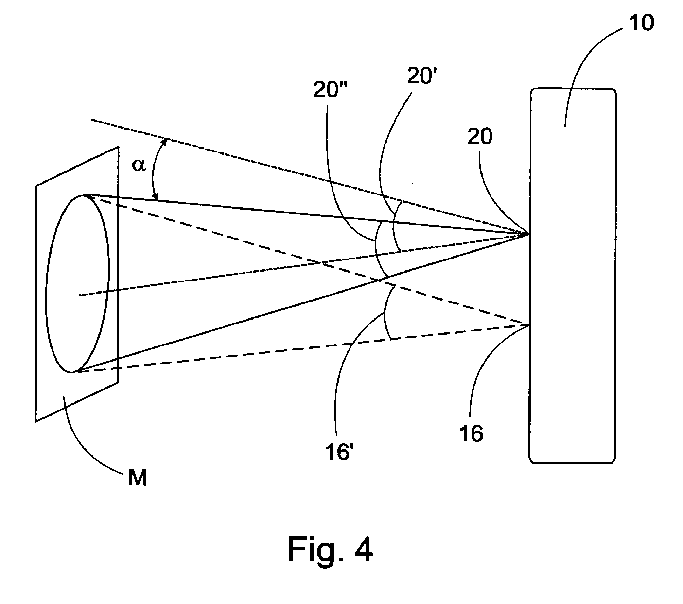

The fact that the projector and camera can never be placed at the same point, as can be seen from Figure 4, leads to a certain problem. In the device 10, the lenses of the camera 16 and the projector 20 are at a distance from each other. The camera 16 has an angle of vision 16' while the projector 20 has an uncorrected projection angle 20'. The corrected projection angle 20" strikes the same area in the subject M only at a specific distance. Thus, it is useful to measure the distance, in order to increase the precision of the projection. According to the measured distance, the projection can be rotated so that the centre of projection and the camera's imaging centre coincide. With the aid of the distance measurement, the power of the laser projector can also be adjusted optimally. The projected dot or image can be exploited in the distance measurement. The distance of the subject can be measured with the aid of a simple geometric equation, if the projection angle and imaging angle (from the image positions) and the geometry of the device are known.

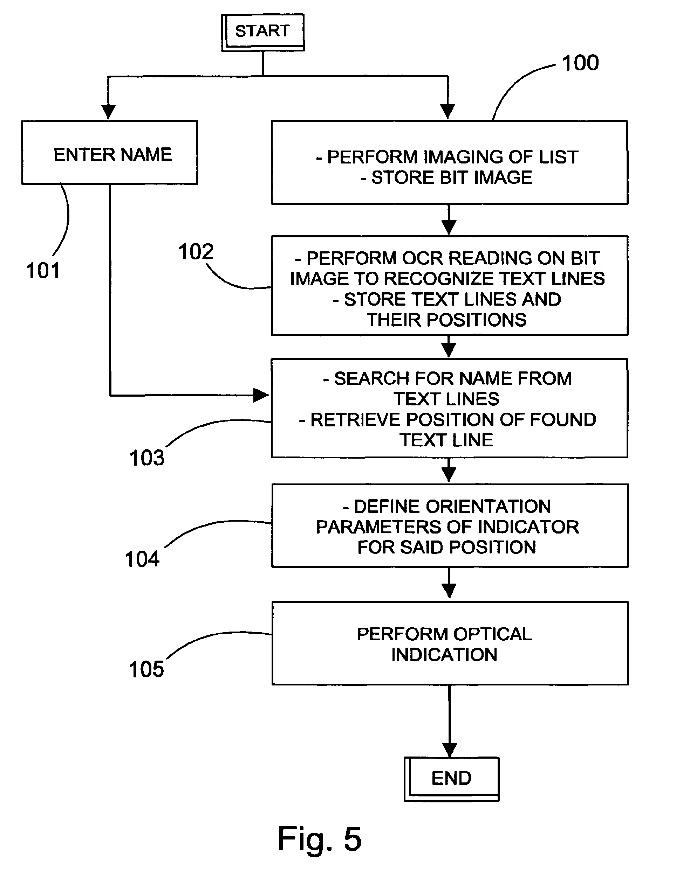

The operation of the device takes place with the aid of an application program arranged on top of the operating system. The flow chart of Figure 5 shows the operation of Figures 2a and 2b. Once the program has started it branches into an imaging function 100 and an input function 101, in which the user is requested for a name from list that is displayed. In the imaging function 100, the user is expected to aim the camera at the list and trigger imaging, in which case the image that is created is stored in the device's memory as a bit image. This is followed by text recognition, stage 102, in which OCR technology is used to search for written characters, i.e. lines of text (or other agreed patterns), from the bit image stored in the memory area. The detected character strings and the bit positions corresponding to them are stored.

After this, the name input is compared with the text in the text lines, stage 103. This is a simple text-search routine. In connection with a hit, the position values corresponding to the hit are also stored. These values are used to define the orientation parameters of the laser projector, stage 104.

Finally, a command is given to the laser projector to project a preselected pattern onto the subject, stage 105.

In an improved variation, before projection the angle position of the subject is detected using approximate and thus rapid optical detection. This is used to correct the orientation parameters, if the device has turned relative to the original imaging position.

The method according to the invention can be implemented using a program product in a device, which comprises a computer with memories and an I/O element. The program product comprises a computer-readable memory medium, in which there are computer-readable program components, which are characterized in that the said components comprise
- a first component to be run programmatically for controlling the camera for taking an image and for storing the image obtained as a bit image of a selected size in a selected memory area of the said memory,
- a second component to be run programmatically for analysing the said bit image in order to find a selected object image from the bit image and for storing the bit positions of the found object image, and
- a third component to be run programmatically for calculating the orientation values form the said bit positions and for transmitting them to the said control unit, in order to orientate the optical indicator according to the found position of the object image.

In one embodiment, the said second program-code component contains
- a routine for entering text describing the object, and
- a routine for performing OCR text recognition in order to find text objects from the bit image and at the same time for storing the positions of the found text objects, and
- a routine for comparing the text describing the object with the detected text objects and for picking the bit positions of the found text object for use in the said third component to be performed.

## Claims

1. A method for visually indicating a selected object on a desired subject (M), the method comprising steps of
- using a device (10) equipped with a camera (16) for taking an image of the subject (M; L),
- analysing the image in order to find and locate an occurrence of the selected object from the image,
**characterized by**
- defining control parameters for directing a projection of a miniature laser projector (20) of the device (10) to the found occurrence of the selected object on the subject (M; L), the control parameters being calculated from the location of the selected object, and
- producing a visual indication (P) with the miniature laser projector (20) on the found occurrence of the selected object on the subject (M; L).

2. A method according to claim 1, further comprising:
- detecting a geographical position of the device (10) by positioning means,
- obtaining detectable coordinates of the area the subject (M) represents,
- calculating, on the basis of the geographical position of the device (10) and the obtained detectable co-ordinates of the subject (M), the control parameters for directing the projection of the miniature laser projector (20) to produce the visual indication (P) on a detected coordinate position of the device on the subject (M).

3. A method according to claim 1, wherein the selected object is input in the device by using characters and the characters are recognized optically from the image of the subject (M).

4. A method according to claim 1, wherein the step of analysing comprises
- an OCR text recognition, where objects of the subject (M) are detected and positions of the objects are defined on the subject (M), the detected objects being compared with the selected object, and
- calculating the control parameters for the projection of the miniature laser projector (20) comprises use of the location of the selected object as a base for the calculation.

5. A method according to any of claims 1-4, wherein the precision of the produced visual indication (P) on the subject (M; L) is adjusted by measuring the distance between the device (10) and the subject (M; L), and needed correction angle (alpha) for measured distance is calculated geometrically.

6. A device for visually indicating a selected object on a desired subject (M), comprising
- a camera (16) for taking an image of the subject (M),
- a microprocessor and a memory for storing computer program code, said computer program code, when executed in said microprocessor, being arranged to analyse the image in order to find and locate an occurrence of the selected object from the image,
**characterized in that** the device (10) further comprising
- a miniature laser projector (20) producing a directional controllable projection, said computer program code being further arranged to
- define control parameters for directing the projection of the miniature laser projector (20) to the found location of the occurrence of the selected object on the subject (M), the control parameters calculated from the found location of the selected object, and
- produce a visual indication (P) with a miniature laser projector (20) on the found location of the occurrence of the selected object on the subject (M).

7. A device according to claim 6, further comprising:
- positioning means for detecting a geographical position of the device (10),
- input means for obtaining detectable coordinates of the area the subject (M) represents,
- directing means for directing the projection of the miniature laser projector (20) to produce the visual indication (P) on a detected coordinate position of the device on the subject (M) on the basis of the geographical position of the device (10) and the obtained detectable coordinates of the subject (M).

8. A device according to claims 6 or 7, further comprising
- input means for inputting the selected object,
- optical character recognition means for detecting characters and positions of the detected characters from the image of the subject (M), the detected characters being compared with the selected object,
- directing means for directing the projection of the miniature laser projector (20) to produce the visual indication (P) on the detected coordinate position of the detected characters on the subject (M), the detected characters corresponding to the selected object.

9. A use of a device as claimed in claims 6 to 8 for creating a virtual ruler on a selected surface, **characterized in that** shapes of objects on a visual field of the camera (16) are detected, a planar surface is calculated based on the detected objects, an orientation of the camera (16) in relation to structure of the objects is detected, the orientation of the camera (16) relative to the planar surface is calculated and the virtual ruler (BP) is projected onto the surface.

10. A use of a device as claimed in claim 9, wherein the orientation of the camera (16) is detected by using an angle sensor (22).

11. A computer program product stored on a computer readable medium and executable in a microprocessor, the computer program product being arranged to carry out the method according to any of the claims 1 - 5.

## Patentansprüche

1. Verfahren zum visuellen Angeben eines ausgewählten Objekts auf einem gewünschten Gegenstand (M), wobei das Verfahren folgende Schritte umfasst:
- Verwenden einer Vorrichtung (10), die mit einer Kamera (16) ausgestattet ist, um ein Bild von dem Gegenstand (M; L) aufzunehmen,
- Analysieren des Bildes, um ein Vorkommen des ausgewählten Objekts aus dem Bild zu finden und zu lokalisieren,
**gekennzeichnet durch** folgende Schritte:
- Definieren von Steuerparametern, um eine Projektion eines Miniaturlaserprojektors (20) der Vorrichtung (10) auf das gefundene Vorkommen des ausgewählten Objekts auf dem Gegenstand (M; L) zu richten, wobei die Steuerparameter aus der Position des ausgewählten Objekts berechnet werden, und
- Erzeugen einer visuellen Angabe (P) mit dem Miniaturlaserprojektor (20) an dem gefundenen Vorkommen des ausgewählten Objekts auf dem Gegenstand (M; L).

2. Verfahren nach Anspruch 1, ferner umfassend folgende Schritte:
- Erfassen einer geographischen Position der Vorrichtung (10) durch Positionsbestimmungsmittel,
- Erzielen von erfassbaren Koordinaten des Bereichs, den der Gegenstand (M) darstellt,
- Berechnen, auf der Grundlage der geographischen Position der Vorrichtung (10) und der erzielten erfassbaren Koordinaten des Gegenstands (M), der Steuerparameter, um die Projektion des Miniaturlaserprojektors (20) zu leiten, so dass sie die visuelle Angabe (P) an einer erfassten Koordinatenposition der Vorrichtung auf dem Gegenstand (M) erzeugt.

3. Verfahren nach Anspruch 1, wobei das ausgewählte Objekt unter Verwendung von Zeichen in die Vorrichtung eingegeben wird, und die Zeichen optisch aus dem Bild des Gegenstandes (M) erkannt werden.

4. Verfahren nach Anspruch 1, wobei der Schritt des Analysierens Folgendes umfasst:
- eine OCR-Texterkennung, wobei die Objekte des Gegenstandes (M) erfasst werden und Positionen der Objekte auf dem Gegenstand (M) definiert werden, wobei die erfassten Objekte mit dem ausgewählten Objekt verglichen werden, und
- das Berechnen der Steuerparameter für die Projektion des Miniaturlaserprojektors (20) umfasst die Verwendung der Position des ausgewählten Objekts als Grundlage für die Berechnung.

5. Verfahren nach einem der Ansprüche 1 bis 4, wobei die Präzision der erzeugten visuellen Angabe (P) auf dem Gegenstand (M; L) angepasst wird, indem der Abstand zwischen der Vorrichtung (10) und dem Gegenstand (M; L) gemessen wird, und der benötigte Korrekturwinkel (Alpha) für den gemessenen Abstand geometrisch berechnet wird.

6. Vorrichtung zum visuellen Angeben eines ausgewählten Objekts auf einem gewünschten Gegenstand (M), umfassend:
- eine Kamera (16), um ein Bild des Gegenstandes (M) aufzunehmen,
- einen Mikroprozessor und einen Speicher, um Computerprogrammcode zu speichern, wobei der Computerprogrammcode, wenn er in dem Mikroprozessor ausgeführt wird, eingerichtet ist, um das Bild zu analysieren, um ein Vorkommen des ausgewählten Objekts aus dem Bild zu finden und zu lokalisieren,
**dadurch gekennzeichnet, dass** die Vorrichtung (10) ferner Folgendes umfasst:
- einen Miniaturlaserprojektor (20), der eine richtungsabhängige steuerbare Projektion erzeugt, wobei der Computerprogrammcode ferner eingerichtet ist zum:
- Definieren von Steuerparametern, um die Projektion des Miniaturlaserprojektors (20) auf die gefundene Position des Vorkommens des ausgewählten Objekts auf dem Gegenstand (M) zu richten, wobei die Steuerparameter aus der gefundenen Position des ausgewählten Objekts berechnet werden, und
- Erzeugen einer visuellen Angabe (P) mit einem Miniaturlaserprojektor (20) an der gefundenen Position des Vorkommens des ausgewählten Objekts auf dem Gegenstand (M).

7. Vorrichtung nach Anspruch 6, ferner umfassend:
- Positionsbestimmungsmittel zum Erfassen einer geographischen Position der Vorrichtung (10),
- Eingabemittel zum Erzielen erfassbarer Koordinaten des Bereichs, den der Gegenstand (M) darstellt,
- Richtmittel, um die Projektion des Miniaturlaserprojektors (20) zu leiten, so dass sie die visuelle Angabe (P) an einer erfassten Koordinatenposition der Vorrichtung auf dem Gegenstand (M) auf der Grundlage der geographischen Position der Vorrichtung (10) und der erzielten erfassbaren Koordinaten des Gegenstands (M) erzeugt.

8. Vorrichtung nach Anspruch 6 oder 7, ferner umfassend:
- Eingabemittel zum Eingeben des ausgewählten Objekts,
- optische Zeichenerkennungsmittel zum Erfassen von Zeichen und Positionen der erfassten Zeichen aus dem Bild des Gegenstandes (M), wobei die erfassten Zeichen mit dem ausgewählten Objekt verglichen werden,
- Richtmittel, um die Projektion des Miniaturlaserprojektors (20) zu leiten, so dass sie die visuelle Angabe (P) an der erfassten Koordinatenposition der erfassten Zeichen auf dem Gegenstand (M) erzeugt, wobei die erfassten Zeichen dem ausgewählten Objekt entsprechen.

9. Verwendung einer Vorrichtung nach Anspruch 6 bis 8, um ein virtuelles Lineal auf einer ausgewählten Oberfläche zu erstellen, **dadurch gekennzeichnet, dass** die Formen von Objekten in einem Sehfeld der Kamera (16) erfasst werden, eine ebene Oberfläche basierend auf den erfassten Objekten berechnet wird, eine Orientierung der Kamera (16) mit Bezug auf die Struktur der Objekte erfasst wird, die Orientierung der Kamera (16) mit Bezug auf die ebene Oberfläche berechnet wird und das virtuelle Lineal (BP) auf die Oberfläche projiziert wird.

10. Verwendung einer Vorrichtung nach Anspruch 9, wobei die Orientierung der Kamera (16) erfasst wird, indem ein Winkelstellungssensor (22) verwendet wird.

11. Computerprogrammprodukt, das auf einem computerlesbaren Datenträger gespeichert ist und in einem Mikroprozessor ausführbar ist, wobei das Computerprogrammprodukt eingerichtet ist, um das Verfahren nach einem der Ansprüche 1 bis 5 auszuführen.

## Revendications

1. Procédé destiné à indiquer visuellement un objet sélectionné sur un sujet souhaité (M), le procédé comprenant les étapes ci-dessous consistant à :
- utiliser un dispositif (10) équipé d'une caméra (16) pour prendre une image du sujet (M ; L) ;
- analyser l'image afin de trouver et de localiser une occurrence de l'objet sélectionné à partir de l'image ;
**caractérisé par** les étapes ci-dessous consistant à :
- définir des paramètres de commande pour orienter une projection d'un projecteur laser miniature (20) du dispositif (10) vers l'occurrence trouvée de l'objet sélectionné sur le sujet (M ; L), les paramètres de commande étant calculés à partir de l'emplacement de l'objet sélectionné ; et
- générer une indication visuelle (P) au moyen du projecteur laser miniature (20) sur l'occurrence trouvée de l'objet sélectionné sur le sujet (M ; L).

2. Procédé selon la revendication 1, comprenant en outre les étapes ci-dessous consistant à :
- détecter une position géographique du dispositif (10) via un moyen de positionnement ;
- obtenir des coordonnées détectables de la zone que le sujet (M) représente ;
- calculer, sur la base de la position géographique du dispositif (10) et des coordonnées détectables obtenues du sujet (M), les paramètres de commande permettant d'orienter la projection du projecteur laser miniature (20) en vue de générer l'indication visuelle (P) sur une position de coordonnées détectées du dispositif sur le sujet (M).

3. Procédé selon la revendication 1, dans lequel l'objet sélectionné est introduit dans le dispositif en utilisant des caractères, et dans lequel les caractères sont reconnus optiquement à partir de l'image du sujet (M).

4. Procédé selon la revendication 1, dans lequel l'étape d'analyse comprend l'élément et l'étape ci-dessous consistant à :
- une reconnaissance de texte OCR, dans laquelle les objets du sujet (M) sont détectés et les positions des objets sont définies sur le sujet (M), les objets détectés étant comparés à l'objet sélectionné ; et
- calculer les paramètres de commande pour la projection du projecteur laser miniature (20), et utiliser l'emplacement de l'objet sélectionné comme base pour le calcul.

5. Procédé selon l'une quelconque des revendications 1 à 4, dans lequel la précision de l'indication visuelle générée (P) sur le sujet (M ; L) est réglée en mesurant la distance entre le dispositif (10) et le sujet (M ; L), et dans lequel l'angle de correction requis (alpha) pour la distance mesurée est calculé géométriquement.

6. Dispositif destiné à indiquer visuellement un objet sélectionné sur un sujet souhaité (M), comprenant :
- une caméra (16) pour prendre une image du sujet (M) ;
- un microprocesseur et une mémoire pour stocker du code de programme informatique, ledit code de programme informatique, lorsqu'il est exécuté dans ledit microprocesseur, étant agencé de manière à analyser l'image afin de trouver et de localiser une occurrence de l'objet sélectionné à partir de l'image ;
**caractérisé en ce que** le dispositif (10) comprend en outre :
- un projecteur laser miniature (20) générant une projection contrôlable directionnelle, ledit code de programme informatique étant en outre agencé de manière à :
- définir des paramètres de commande pour orienter la projection du projecteur laser miniature (20) vers l'emplacement trouvé de l'occurrence de l'objet sélectionné sur le sujet (M), les paramètres de commande étant calculés à partir de l'emplacement trouvé de l'objet sélectionné ; et
- générer une indication visuelle (P) au moyen d'un projecteur laser miniature (20) sur l'emplacement trouvé de l'occurrence de l'objet sélectionné sur le sujet (M).

7. Dispositif selon la revendication 6, comprenant en outre :
- un moyen de positionnement pour détecter une position géographique du dispositif (10) ;
- un moyen d'entrée pour obtenir des coordonnées détectables de la zone que le sujet (M) représente ;
- un moyen d'orientation pour orienter la projection du projecteur laser miniature (20) en vue de générer l'indication visuelle (P) sur une position de coordonnées détectées du dispositif sur le sujet (M), sur la base de la position géographique du dispositif (10) et des coordonnées détectables obtenues du sujet ( M).

8. Dispositif selon la revendication 6 ou 7, comportant en outre :
- un moyen d'entrée pour introduire l'objet sélectionné ;
- un moyen de reconnaissance optique de caractères pour détecter des caractères et des positions des caractères détectés à partir de l'image du sujet (M), les caractères détectés étant comparés à l'objet sélectionné ;
- un moyen d'orientation pour orienter la projection du projecteur laser miniature (20) en vue de générer l'indication visuelle (P) sur la position de coordonnées détectées des caractères détectés sur le sujet (M), les caractères détectés correspondant à l'objet sélectionné.

9. Utilisation d'un dispositif selon l'une quelconque des revendications 6 à 8, en vue de créer une règle virtuelle sur une surface sélectionnée, **caractérisée en ce que** des formes d'objets sur un champ visuel de la caméra (16) sont détectées, une surface plane est calculée sur la base des objets détectés, une orientation de la caméra (16) relativement à la structure des objets est détectée, l'orientation de la caméra (16) relativement à la surface plane est calculée et la règle virtuelle (BP) est projetée sur la surface.

10. Utilisation d'un dispositif selon la revendication 9, dans lequel l'orientation de la caméra (16) est détectée en utilisant un capteur d'angle (22).

11. Produit-programme informatique stocké sur un support informatique lisible par ordinateur, et exécutable dans un microprocesseur, le produit-programme informatique étant agencé pour mettre en oeuvre le procédé selon l'une quelconque des revendications 1 à 5.
